# EUROPÄISCHE PATENTSCHRIFT

(11) **EP 1 781 500 B1**
(45) Veröffentlichungstag und Bekanntmachung des Hinweises auf die Patenterteilung: **23.09.2009**
(21) Anmeldenummer: 05784790.7
(22) Anmeldetag: 23.08.2005
(51) Int. Cl.: B60R 16/02

(54) **VORRICHTUNG ZUR DATENÜBERTRAGUNG**
DEVICE FOR TRANSMITTING DATA
DISPOSITIF DE TRANSMISSION DE DONNEES

(30) Priorität: 24.08.2004 DE 102004041085
(43) Veröffentlichungstag der Anmeldung: 09.05.2007
(73) Patentinhaber: ZF Friedrichshafen AG, 88038 Friedrichshafen (DE)
(72) Erfinder: ERSOY, Metin, 65396 Walluf (DE); HAEUSLER, Felix, 49084 Osnabrück (DE); KLANK, Michael, 49084 Osnabrück (DE); GRANNEMANN, Bernd, 32479 Hille (DE); MÜLLER, Armin, 32369 Rahden (DE); SPRATTE, Joachim, 49090 Osnabrück (DE)
(86) Internationale Anmeldenummer: PCT/DE2005/001484
(87) Internationale Veröffentlichungsnummer: WO 2006/021197

(56) Entgegenhaltungen:
- DE-A1- 10 050 279
- DE-A1- 10 308 220
- US-A- 6 076 883

## Beschreibung

Die Erfindung betrifft ein Kraftfahrzeug mit einer Vorrichtung zur Datenübertragung nach dem Oberbegriff des Patentanspruches 1.

Zur Bestimmung von kraftfahrzeug- oder fahrbahnspezifischen Daten werden in Kraftfahrzeugen zunehmend Sensoren zum Einsatz gebracht, die entsprechend dem an sie gestellten Anforderungsprofil Daten erfassen, um damit beispielsweise den Fahrkomfort oder die Sicherheit des Kraftfahrzeugs zu erhöhen.

Die an oder in relativ zur Karosserie des Kraftfahrzeuges lageveränderbaren Fahrwerkkomponenten vorhandenen Sensoren generieren Daten, die an wenigstens eine zentrale Verarbeitungseinheit weitergeleitet werden, um sie dort zu verarbeiten. Je nach Datenmenge oder Datenart können darüber hinaus Auswerteeinheiten vorgesehen werden. Diese karosseriefesten Bauteile oder Baugruppen zur Aufbereitung und/oder Auswertung der in oder an den lageveränderbaren Fahrwerkkomponenten generierten Daten müssen jedoch ebenfalls mit den sensierten Signalen versorgt werden, sodass in jedem Fall zumindest eine Übertragungseinrichtung zur Datenübermittlung erforderlich ist. Werden beispielsweise Daten im radnahen Bereich erfasst, so sind die elektronischen Bauelemente und insbesondere die Übertragungseinrichtungen erheblichen thermischen, mechanischen und/oder chemischen Einflüssen ausgesetzt. Zudem ist es erforderlich, die Übertragungseinrichtungen entlang beweglicher Bauteile oder Baugruppen zu führen. Hierfür müssen sie ebenso flexibel ausgeführt sein, wie ihre Verbindungsbereiche, das heißt die Schnittstellen, denn ein selbsttätiges Lösen oder eine Zerstörung der Verbindung zwischen Sensor und Verarbeitungseinheit kann zu erheblichen Beeinträchtigungen führen oder ein sicherheitsrelevantes Risiko darstellen.

Bislang bekannte Übertragungseinrichtungen sind entweder verschleißanfällig oder unflexibel und können deshalb den zum Teil hochfrequenten Bewegungen der Fahrwerkskomponenten nicht hinreichend folgen.

Es sind auch Lösungen bekannt, bei denen als Übertragungseinrichtungen Drähte innerhalb von Fahrwerkskomponenten verlegt sind. Diese Art der Datenübertragung ist in mehrfacher Hinsicht nachteilig. Einerseits muss das Fahrwerksbauteil eine Eintritts- und eine Austrittsöffnung für die Übertragungseinrichtungen aufweisen, was eine Querschnittsschwächung bedeutet. Andererseits besteht die Gefahr, dass die Eintritts- bzw. Austrittsöffnung undichte Stellen aufweist, sodass die Fahrwerkkomponente selbst korrosionsgefährdet sein kann bzw. Verunreinigungen in die Fahrwerkkomponente eindringen können. Ferner müssen zum Schutz der Übertragungseinrichtungen gegen mechanische Beschädigungen oder zur Vermeidung eines Kurzschlusses im Bereich der Eintritts- und der Austrittsöffnung besonders aufwendige Isoliermaßnahmen vorgesehen werden.

Des weiteren offenbart die US 6,076,883 eine Vorrichtung zur Datenübertragung zwischen der Karosserie eines Fahrzeuges und einer hierzu beweglichen Fahrzeugtür. Die Datenübertragungsvorrichtung weist dabei ein Flachkabel auf, welches einenends mit der Fahrzeugtür verbunden ist. Karosserieseitig wird das Flachkabel auf einer mit einer Spiralfeder gespannten Wickelrolle aufgewickelt, so dass das Flachkabel ständig unter einer Vorspannung steht. Bedingt durch das Aufwickeln der Folienbahn und der Vorspannung unterliegt das Flachkabel einer großen statischen und dynamischen Belastung, die zum vorzeitigen Ausfall derselben führen kann bzw. entsprechend groß dimensioniert sein muss. Ferner benötigt die Wickelrolle einen erheblichen Bauraum.

Der Erfindung liegt die Aufgabe zugrunde, ein Kraftfahrzeug mit einer Vorrichtung zur Datenübertragung bereitzustellen, die widerstandsfähig gegenüber Verschleiß ist und die eine einfache und zuverlässige Übertragung der sensierten Daten auch entlang bewegter Fahrwerkkomponenten ermöglicht.

Diese Aufgabenstellung wird mit den Merkmalen des unabhängigen Patentanspruchs gelöst.
Ausgestaltungen der Erfindung sind in den Unteransprüchen wiedergegeben.

Erfindungsgemäß wird daher vorgeschlagen, die Übertragungseinrichtung als eine mit Leiterbahnen versehene Kunststoff-Folienbahn auszubilden, deren Leiterbahnen eine Verbindung zwischen fahrwerksseitig und karosserieseitig vorgesehenen Schnittstellen herstellen.

Die Kunststoff-Folienbahn ist aufgrund ihrer Flexibilität in der Lage, sich mit den zum Teil hochfrequenten Bewegungen der Fahrwerkskomponenten mitzubewegen, ohne dabei selbst Schaden zu nehmen. Sie kann darüber hinaus ohne große Aufwendungen auch über Gelenkabschnitte geführt und an schwer zugänglichen Stellen verlegt werden. Je nach Ausstattung mit Leiterbahnen können nahezu beliebige Datenmengen übertragen werden. Als Leiterbahnen können elektrische Leiter ebenso zum Einsatz kommen, wie optische oder andere.

Gemäß einer Ausgestaltung der Erfindung wird es als vorteilhaft angesehen, wenn die Schnittstellen durch Steckverbinder realisiert sind. Damit ist eine einfache Möglichkeit geschaffen worden, eine Verbindung zur Datenübertragung herzustellen oder zu unterbrechen. Dies kann beispielsweise notwendig sein, wenn eine Fahrwerkskomponente repariert oder ausgetauscht werden muss.

Zur Vermeidung einer ungewollt selbsttätigen Trennung einer derartigen Schnittstelle mit Steckverbindern können die Steckverbinder ferner eine Lösesicherung aufweisen.

Da die erfindungsgemäße Vorrichtung zur Datenübertragung ausschließlich für Kraftfahrzeuge zum Einsatz kommen wird, ist es sinnvoll, einen Schutz gegen die bereits erwähnten thermischen, mechanischen und/oder chemischen Einflüsse vorzusehen. Dies kann beispielsweise dadurch erfolgen, dass die Kunststoff-Folienbahn eine außen liegende Schutzschicht oder eine Schutzumhüllung aufweist, die gemäß einer weiteren Ausgestaltung aus elastomerem Material bestehen kann.

Ein weiterer Vorteil einer flexiblen Kunststoff-Folienbahn ist darin zu sehen, dass diese entlang der Fahrwerkkomponenten verlegbar ist oder zumindest teilweise während der Herstellung in die Fahrwerkkomponente integriert, das heißt beispielsweise, in diese eingebettet werden kann.

Eine sehr einfache Befestigungsmöglichkeit für eine erfindungsgemäße Kunststoff-Folienbahn an einer Fahrwerkkomponente ist auch darin zu sehen, dass die Kunststoff-Folienbahn Ausnehmungen oder Durchbrüche aufweist, in die Befestigungselemente zur Befestigung der Kunststoff-Folienbahn an den Fahrwerkkomponenten oder an karoseriefesten Bauteilen oder Baugruppen eingreifen.

Ebenso besteht die Möglichkeit, zur Fixierung der Kunststoff-Folienbahn an den Fahrwerkkomponenten oder karosseriefesten Bauteilen oder Baugruppen eine kraftschlüssige Verbindung vorzusehen.

Sofern es sich es sich bei den relativ zur Karosserie des Kraftfahrzeuges lageveränderbaren Fahrwerkkomponenten um Radführungselemente oder Federungskomponenten handelt, kann die Kunststoff-Folienbahn sehr einfach und damit kostengünstig in einer Vertiefung oder Ausnehmung der Radführungselemente oder Federungskomponenten verlegt werden, was gleichermaßen einen zusätzlichen Schutz für die Kunststoff-Folienbahn bietet.

Durch eine weitere Ausgestaltung der Erfindung ist es möglich, Daten, die durch die Sensoren generiert bzw. sensiert wurden, zu bearbeiten und somit beispielsweise eine Selektion und erforderlichenfalls eine Reduzierung der zur Übertragung an die zentrale Verarbeitungseinheit (CPU) weiterzuleitenden Daten vorzunehmen. Dies kann durch einen an oder in den relativ zur Karosserie des Kraftfahrzeuges lageveränderbaren Fahrwerkkomponenten vorhandenen Prozessor erfolgen.

Neben der Datenübertragung bieten sich für die als flexible Kunststoff-Folienbahn ausgebildete Übertragungseinrichtung weitere Verwendungsmöglichkeiten. So ist es entsprechend einem weiterführenden Erfindungsgedanken möglich, die Kunststoff-Folienbahn auch oder ausschließlich zur Übertragung von Energie einzusetzen. Damit könnten nicht nur Messsignale übertragen, sondern erforderlichenfalls elektronische Baugruppen oder Bauteile zusätzlich mit Energie versorgt werden. Der Begriff "Energie" ist dabei allerdings nicht auf eine elektrische Stromversorgung beschränkt. Ebenso kann es sich hierbei um andere Energieformen handeln.

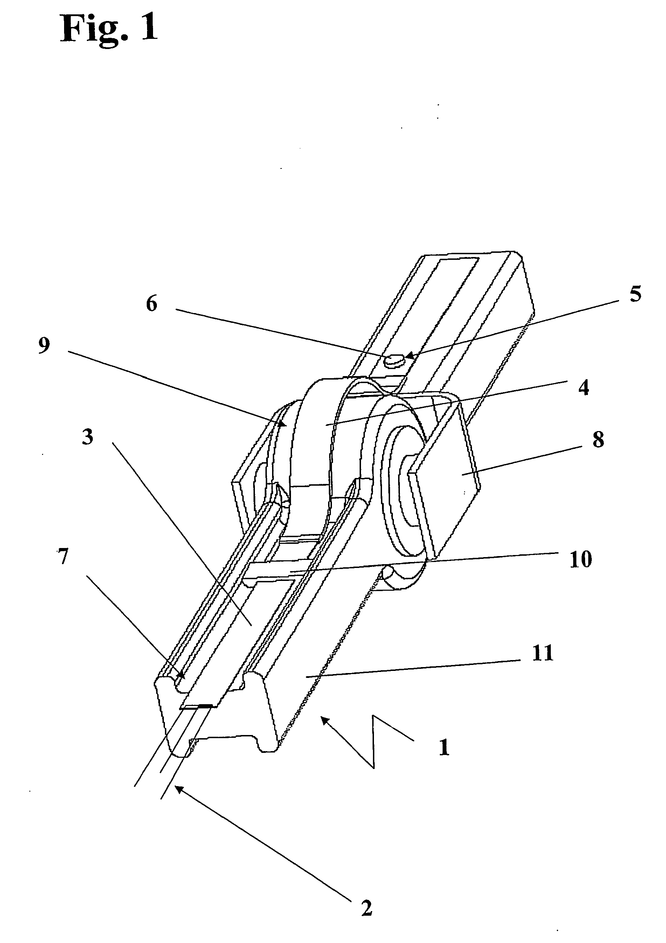

Eine bevorzugte, spezielle Ausfühlungsvariante eines erfindungsgemäßen Kraftfahrzeugs mit einer Vorrichtung zur Datenübertragung wird nachfolgend anhand der Figur 1 beschrieben, in der ausschnittsweise und vereinfacht eine Verbindung zwischen einer Fahrwerkskomponente und dem Kraftfahrzeug gezeigt ist.

Bei der in Figur 1 dargestellten Fahrwerkskomponente 1 handelt es sich um einen Querlenker, der eine Verbindung zwischen dem Fahrzeugrad und dem Fahrzeugaufbau schafft. Endseitig weist dieser Querlenker 1 ein Lagerelement 9 auf, das eine gelenkige Verbindung zu einer Gabel 8 eines Hilfsrahmens herstellt. Der Querlenker 1 weist einen gelenkabgewandten Abschnitt mit Doppel-T-förmigem Querschnitt auf, sodass dadurch an zwei einander gegenüberliegenden Seiten des Querlenkerarmes 11 Ausnehmungen bzw. Vertiefungen 7 ausgebildet sind, die für die Anbringung einer erfindungsgemäßen Kunststoff-Folienbahn 3 nutzbar sind. Bei dem gezeigten Ausführungsbeispiel sind in die Kunststoff-Folienbahn 3 mehrere Leiterbahnen 2 eingebettet, die der Datenübertragung dienen. Die Kunststoff-Folienbahn 3 kann in unterschiedlicher Weise an dem Querlenker 1 oder an anderen Bauteilen befestigt werden. Die Figur 1 zeigt eine erste Befestigungsmöglichkeit, bei der durch eine Ausnehmung 5 in der Kunststoff-Folienbahn 3 ein Befestigungseleinent 6 geführt ist, das die Kunststoff-Folienbahn 3 somit kraft- oder formschlüssig fixiert.

Eine weitere, im vorderen Bildteil gezeigte Befestigungsmöglichkeit besteht darin, die Kunststoff-Folienbahn 3 mittels einer Schelle 10 zu halten, die in die Vertiefung 7 des Querlenkers 1 eingesetzt ist. Zum Schutz der Kunststoff-Folienbahn 3 vor mechanischen, thermischen und/oder chemischen Einflüssen ist eine in der Figur 1 nur andeutungsweise dargestellte Schutzschicht 4 vorgesehen, die hier aus Gummi hergestellt wurde und die eine Schutzumhüllung der Kunststoff-Folienbahn 3 bildet.

### Bezugszeichenliste

- 1.: Fahrwerkkomponente (Querlenker)
- 2.: Leiterbahn
- 3.: Kunststofffolienbahn
- 4.: Schutzschicht, Schutzumhüllung
- 5.: Durchbruch, Ausnehmung
- 6.: Befestigungselement
- 7.: Vertiefung, Ausnehmung
- 8.: Gabel
- 9.: Lagerelement
- 10.: Schelle
- 11.: Querlenkerarm

## Patentansprüche

1. Kraftfahrzeug mit einer Vorrichtung zur Datenübertragung für ein Kraftfahrzeug, mit der Datengenerierung dienenden Sensoren, die an oder in relativ zur Karosserie des Kraftfahrzeuges lageveränderbaren Fahrwerkkomponenten (1) angeordnet sind, mit karosseriefest vorgesehenen Bauteilen oder Baugruppen zur Aufbereitung und/oder Auswertung der in oder an den lageveränderbaren Fahrwerkkomponenten (1) generierten Daten, und mit einer Übertragungseinrichtung für die von den Sensoren gelieferten Daten an die karosseriefest angeordneten Bauteile oder Baugruppen,
**dadurch gekennzeichnet, dass** es sich es sich bei den relativ zur Karosserie des Kraftfahrzeuges lageveränderbaren Fahrwerkkomponenten um Radführungselemente oder Federungskomponenten handelt und die Übertragungseinrichtung als eine mit Leiterbahnen (2) versehene Kunststoff-Folienbahn (3) ausgebildet ist, deren Leiterbahnen (2) eine Verbindung zwischen fahrwerkseitig und karosserieseitig vorgesehenen Schnittstellen herstellen.

2. Kraftfahrzeug mit einer Vorrichtung zur Datenübertragung nach Anspruch 1,
**dadurch gekennzeichnet, dass** die Schnittstellen durch Steckverbinder realisiert sind.

3. Kraftfahrzeug mit einer Vorrichtung zur Datenübertragung nach Anspruch 2,
**dadurch gekennzeichnet, dass** die Steckverbinder eine Lösesicherung aufweisen.

4. Kraftfahrzeug mit einer Vorrichtung zur Datenübertragung nach Anspruch 1,
**dadurch gekennzeichnet, dass** die Kunststoff-Folienbahn (3) eine außenliegende Schutzschicht (4) oder eine Schutzumhüllung aufweist.

5. Kraftfahrzeug mit einer Vorrichtung zur Datenübertragung nach Anspruch 4 ,
**dadurch gekennzeichnet, dass** die Schutzschicht (4) oder Schutzumhüllung aus elastomerem Material besteht.

6. Kraftfahrzeug mit einer Vorrichtung zur Datenübertragung nach Anspruch 1,
**dadurch gekennzeichnet, dass** in der Kunststoff-Folienbahn (3) Ausnehmungen oder Durchbrüche (5) vorhanden sind, in die Befestigungselemente (6) zur Befestigung der Kunststoff-Folienbahn (3) an den Fahrwerkkomponenten (1) oder karoseriefesten Bauteilen oder Baugruppen eingreifen.

7. Kraftfahrzeug mit einer Vorrichtung zur Datenübertragung nach Anspruch 1,
**dadurch gekennzeichnet, dass** die Fixierung der Kunststoff-Folienbahn (3) an den Fahrwerkkomponenten (1) oder karosseriefesten Bauteilen oder Baugruppen durch eine kraftschlüssige Verbindung erfolgt.

8. Kraftfahrzeug mit einer Vorrichtung zur Datenübertragung nach Anspruch 1,
**dadurch gekennzeichnet, dass** die Kunststoff-Folienbahn (3) in einer Vertiefung oder Ausnehmung (7) der Radführungselemente oder Federungskomponenten verläuft.

9. Kraftfahrzeug mit einer Vorrichtung zur Datenübertragung nach Anspruch 1,
**dadurch gekennzeichnet, dass** an oder in relativ zur Karosserie des Kraftfahrzeuges lageveränderbaren Fahrwerkkomponenten mindestens ein Prozessor zur Verarbeitung, Selektion und/oder Weiterleitung von Daten an eine karosseriefeste Rechnereinheit vorhanden ist.

10. Kraftfahrzeug mit einer Vorrichtung zur Datenübertragung nach einem der Ansprüche 1 bis 9,
**dadurch gekennzeichnet, dass** die Vorrichtung zur Datenübertragung ein Mittel zur Übertragung von Energie ist oder aufweist.

## Claims

1. Motor vehicle with a device for transmitting data for a motor vehicle, with sensors which are used for data generation and are disposed on or in chassis components (1) whose position is variable relative to the body of the motor vehicle, with component parts or sub-assemblies provided rigid with the body for preparing and/or evaluating the data which are generated in or on the variable-position chassis components (1), and with a transmission device for transmitting the data supplied by the sensors to the component parts or sub-assemblies disposed rigid with the body,
**characterised in that** the chassis components whose position is variable relative to the body of the motor vehicle are wheel guide elements or suspension components, and the transmission device is formed as a plastics film web (3) which is provided with conductor paths (2) and the conductor paths (2) of which establish a connection between interfaces provided on the chassis side and the body side.

2. Motor vehicle with a device for transmitting data according to Claim 1,
**characterised in that** the interfaces are implemented by means of plug-in connectors.

3. Motor vehicle with a device for transmitting data according to Claim 2,
**characterised in that** the plug-in connectors comprise an anti-release mechanism.

4. Motor vehicle with a device for transmitting data according to Claim 1,
**characterised in that** the plastics film web (3) comprises an external protective layer (4) or a protective covering.

5. Motor vehicle with a device for transmitting data according to Claim 4,
**characterised in that** the protective layer (4) or protective covering consists of elastomeric material.

6. Motor vehicle with a device for transmitting data according to Claim 1,
**characterised in that** in the plastics film web (3) there are recesses or openings (5) in which fastening elements (6) engage for fastening the plastics film web (3) to the chassis components (1) or component parts or sub-assemblies rigid with the body.

7. Motor vehicle with a device for transmitting data according to Claim 1,
**characterised in that** the plastics film web (3) is fixed to the chassis components (1) or component parts or sub-assemblies rigid with the body by means of a non-positive connection.

8. Motor vehicle with a device for transmitting data according to Claim 1,
**characterised in that** the plastics film web (3) extends in an indentation or recess (7) of the wheel guide elements or suspension components.

9. Motor vehicle with a device for transmitting data according to Claim 1,
**characterised in that** at least one processor for processing, selecting and/or forwarding data to a computer unit rigid with the body is provided on or in chassis components whose position is variable relative to the body of the motor vehicle.

10. Motor vehicle with a device for transmitting data according to any one of Claims 1 to 9,
**characterised in that** the device for transmitting data is or comprises a means for transmitting energy.

## Revendications

1. Automobile comportant un dispositif de transfert de données pour une automobile, comportant des capteurs servant à générer des données, qui sont agencés au niveau de ou dans des composants (1) de train de roulement dont la position peut être modifiée par rapport à la carrosserie de l'automobile, comportant des éléments ou des modules prévus de manière fixe sur la carrosserie pour le traitement et/ou l'interprétation des données générées dans ou au niveau des composants (1) de train de roulement dont la position peut être modifiée, et comportant un dispositif de transfert pour les données délivrées par les capteurs vers les éléments ou modules agencés de manière fixe sur la carrosserie,
**caractérisée en ce que** les composants de train de roulement dont la position peut être modifiée par rapport à la carrosserie de l'automobile sont des éléments de la direction ou des composants de la suspension et le dispositif de transfert est réalisé sous la forme d'une feuille en continu (3) de matière plastique, munie de circuits conducteurs (2), ces circuits conducteurs (2) établissant une communication entre des interfaces prévues côté train de roulement et côté carrosserie.

2. Automobile comportant un dispositif de transfert de données selon la revendication 1,
**caractérisée en ce que** les interfaces sont réalisées grâce à des connecteurs.

3. Automobile comportant un dispositif de transfert de données selon la revendication 2,
**caractérisée en ce que** les connecteurs présentent une sécurité antidéserrage.

4. Automobile comportant un dispositif de transfert de données selon la revendication 1,
**caractérisée en ce que** la feuille en continu (3) de matière plastique présente une couche protectrice (4) extérieure ou un revêtement protecteur.

5. Automobile comportant un dispositif de transfert de données selon la revendication 4,
**caractérisée en ce que** la couche protectrice (4) ou le revêtement protecteur est constitué(e) d'un matériau élastomère.

6. Automobile comportant un dispositif de transfert de données selon la revendication 1,
**caractérisée en ce que** des évidements ou percements (5) sont présents dans la feuille en continu (3) de matière plastique, dans lesquels s'engagent des éléments de fixation (6) destinés à la fixation de la feuille en continu (3) de matière plastique au niveau des composants (1) de train de roulement ou des éléments ou modules fixés sur la carrosserie.

7. Automobile comportant un dispositif de transfert de données selon la revendication 1,
**caractérisée en ce que** la fixation de la feuille en continu (3) de matière plastique au niveau des composants (1) de train de roulement ou des éléments ou modules fixés sur la carrosserie a lieu par liaison de force.

8. Automobile comportant un dispositif de transfert de données selon la revendication 1,
**caractérisée en ce que** la feuille en continu (3) de matière plastique passe dans un renfoncement ou évidement (7) des éléments de direction ou des composants de suspension.

9. Automobile comportant un dispositif de transfert de données selon la revendication 1,
**caractérisée en ce qu'**au moins un processeur destiné au traitement, à la sélection et/ou au réacheminement de données vers un calculateur fixé sur la carrosserie est présent au niveau de ou dans des composants de train de roulement dont la position peut être modifiée par rapport à la carrosserie de l'automobile.

10. Automobile comportant un dispositif de transfert de données selon l'une quelconque des revendications 1 à 9,
**caractérisée en ce que** le dispositif de transfert de données est ou présente un moyen de transfert d'énergie.
